# EUROPÄISCHE PATENTSCHRIFT

(11) **EP 1 218 657 B1**
(45) Veröffentlichungstag und Bekanntmachung des Hinweises auf die Patenterteilung: **21.04.2004**
(21) Anmeldenummer: 00974372.5
(22) Anmeldetag: 09.09.2000
(51) Int. Cl.: F16L 13/10, F16L 47/02

(54) **ROHRFÖRMIGES KUPPLUNGSTEIL ZUR HERSTELLUNG EINER KLEBEVERBINDUNG MIT EINER FLUIDLEITUNG**
TUBULAR COUPLING ELEMENT FOR PRODUCING A GLUED JOINT WITH A FLUID LINE
RACCORD TUBULAIRE POUR LA FABRICATION D'UNE LIAISON COLLEE AVEC UNE CONDUITE A FLUIDE

(30) Priorität: 21.09.1999 DE 19945218
(43) Veröffentlichungstag der Anmeldung: 03.07.2002
(73) Patentinhaber: A. Raymond & Cie, 38028 Grenoble (FR)
(72) Erfinder: Bremont, Michel, F-68220 Attenschwiller (FR); Dalla Zuanna, Cyrille, F-69009 Lyon (FR); Papirer, Yves, F-68170 Rixheim (FR); Moretti, Erminio, F-38000 Grenoble (FR); Perrin, Gilles, F-38130 Echirolles (FR); Raymond, Albert, F-38640 Claix (FR)
(74) Vertreter: Kirchgaesser, Johannes, Dipl.-Ing.
(86) Internationale Anmeldenummer: PCT/EP2000/008824
(87) Internationale Veröffentlichungsnummer: WO 2001/021996

(56) Entgegenhaltungen:
- EP-A- 0 289 831
- FR-A- 1 493 562
- US-A- 4 092 193
- US-A- 4 896 904
- FOSCALDI L S, SCHIEFER C: "Adhesive-Bonded Structural Joint" IBM TECHNICAL DISCLOSURE BULLETIN, Bd. 12, Nr. 4, September 1969 (1969-09), Seite 507 XP002160285

## Beschreibung

Die Erfindung bezieht sich auf ein rohrförmiges Kupplungsteil zur Herstellung einer Klebeverbindung mit einer Fluidleitung, wobei das Kupplungsteil aus einem in die Fluidleitung einführbaren Innenrohr und einem konzentrisch zu diesem ausgebildeten Außenrohr besteht, welches am hinteren Ende des Innenrohres mit einem geschlossenen Ring angeformt ist.

Aus der **DT 26 03 299 A1** ist ein solches Kupplungsteil bekannt, bei dem der ringförmige Spalt zwischen dem Innenrohr und dem Außenrohr mit flüssigem Klebstoff befüllt wird, und zwar in einer solchen Menge, daß die Zwischenräume zwischen der Fluidleitung und dem Innenrohr bzw. dem Außenrohr nach dem Eindrücken der Fluidleitung voll ausgefüllt sind. Der Klebstoff besteht hierbei aus zwei flüssigen Komponenten, die durch entfernbare Trenn- und Abdeckfolien im Ringspalt festgehalten werden. Diese Arbeitsweise mit flüssigen Klebstoffkomponenten hat den Nachteil, daß die Folien auf der Baustelle zunächst entfernt werden müssen, bevor das Rohrende der Fluidleitung in den Ringspalt eingeführt werden kann. Außerdem müssen das Rohrende und das Kupplungsteil in einer axial ausgerichteten Lage solange gehalten werden, bis die Klebstoffmasse sich verfestigt hat. Auch erfordert es große Aufmerksamkeit beim Einfüllen der Klebstoffkomponenten, bei der richtigen Dosierung und beim luftdichten Verschließen des Ringspaltes.

Aus der **DE 44 42 407 C1** ist ebenfalls ein solches rohrförmiges Kupplungsteil bekannt, bei welchem der Ringspalt mit einem aushärtefähigen Dicht- oder Bindemittel aufgefüllt und dann mit einer lösbaren, luftdichten Abdeckung verschlossen wird. Auch hierbei ergeben sich die gleichen vorgenannten Nachteile, daß nämlich die Abdeckfolie auf der Baustelle zunächst entfernt werden muß, bevor das Rohrende der Fluidleitung zur Herstellung einer Klebeverbindung in den Ringspalt eingeführt werden kann.

Aufgabe der Erfindung ist es, den Ringspalt unter Verwendung eines geeigneten Klebstoffes so auszubilden und zu befüllen, daß sich die Kupplungsteile mit den Endabschnitten der Fluidleitungen auf einfache Weise schnell und problemlos verbinden lassen.

Aus der US-A-4 092 103 ist es ferner bekannt, zur Herstellung einer Klebeverbindung zwischen zwei rohrförmigen Teilen einen trockenen, als festen Ring verpreßten, aufschmelzbaren Klebstoff zu verwenden. Der Klebstoffring wird hierbei von dem Innenrohr getragen, während das Außenrohr beim Erhitzen aufgrund seiner Rückstellkraft einen radial nach innen wirkenden Anpreßdruck auf den Schmelzklebstoff ausübt. Dadurch werden die einander überlappenden Enden von rohrförmigen Substraten, die sich zwischen dem Außenrohr und dem Klebstoffring befinden, miteinander verbunden. Demgegenüber geht es bei der vorliegenden Erfindung darum, das Ende einer Fluidleitung in ein rohrförmiges Kupplungsstück mit einem Innenrohr und einem Außenrohr einzuführen und zu verkleben, wobei auf den im Ringspalt eingelagerten, als festen Ring verpreßten, aufschmelzbaren Klebstoff ein Anpreßdruck in achsparalleler Richtung ausgeübt werden muß.

Zur Lösung dieser Aufgabe wird vorgeschiagen, den ringförmigen Spalt zwischen dem Innenrohr und dem Außenrohr mit einem trockenen, als festen Ring verpreßten, aufschmelzbaren Klebstoff zu befüllen.

Hierdurch gestaltet sich die Herstellung einer Klebeverbindung zwischen dem Ende der Fluidleitung und dem Kupplungsteil wesentlich einfacher und preisgünstiger als beim Stand der Technik. Dadurch, daß der aufschmelzbare Klebstoff als fest verpreßter Ring in den Ringspalt eingebracht wird, kann dieser auch ohne Verschlußmittel gut gehalten und für den Gebrauch jederzeit durch Aufschmelzen reaktiviert werden. Schließlich lassen sich mit dem vorliegenden Klebeverfahren Fluidleitungen und Kupplungsteile auch dann problemlos miteinander verbinden, wenn das Kupplungsgehäuse aus Kunststoffmaterial besteht, während als Fluidleitung ein Aluminiumrohr oder ein mit Kunststoff ummanteltes Metallrohr verwendet wird, wie es heute in zunehmendem Maße üblich ist.

In den Unteransprüchen sind für die Gestaltung des Kupplungsteils förderliche Weiterbildungen der Erfindung angegeben, die im Einzelnen folgende Vorteile aufweisen:

So soll die Ausbildung des Innenrohrs nach Anspruch 2 dem Endbereich der Fluidleitung als zentrierende Anlage dienen, während der Schmelzklebstoff sich zwischen den Längsrippen verteilen kann.

Durch die Ausgestaltung des Außenrohres nach Anspruch 3 wird ferner erreicht, daß der zwischen Innen- und Außenrohr eingesetzte Klebstoff beim Aufschmelzen gut entlang der Rillen nach außen quellen kann und somit für eine gleichmäßige Verteilung des Klebstoffs gesorgt ist.

Durch das vorgeschlagene Verfahren zur Herstellung einer Klebeverbindung nach Anspruch 4 wird außerdem eine vorteilhafte Vorgehensweise angegeben, wie der in den Ringspalt eingebrachte Klebstoffring während des Einführens der Fluidleitung rasch erwärmt wird und sich das Ende der Fluidleitung in den aufschmelzenden Klebstoff gut eindrücken läßt.

In der Zeichnung ist ein bevorzugtes Ausführungsbeispiel der Erfindung dargestellt und soll nachfolgend näher erläutert werden. Es zeigt:
- **Fig. 1**: ein Kupplungsgehäuse in Seitenansicht mit Teilschnitt durch das Kupplungsteil gemäß Linie I-I in Fig. 2,
- **Fig. 2**: einen Querschnitt durch das Kuplungsteil gemäß Linie II - II in Fig. 1,
- **Fig. 3**: einen verpreßten Klebstoffring zum Einführen in den ringförmigen Spalt des Kupplungsteils im Längsschnitt,
- **Fig. 4**: ein Kupplungsgehäuse in schematischer Darstellung mit eingedrücktem Klebstoffring,
- **Fig 5 und 6**: den Arbeitsablauf bei der Herstellung der Klebeverbindung zwischen dem Kupplungsteil und der Fluidleitung und
- **Fig. 7**: das mit der Fluidleitung fertig verklebte Kupplungsteil.

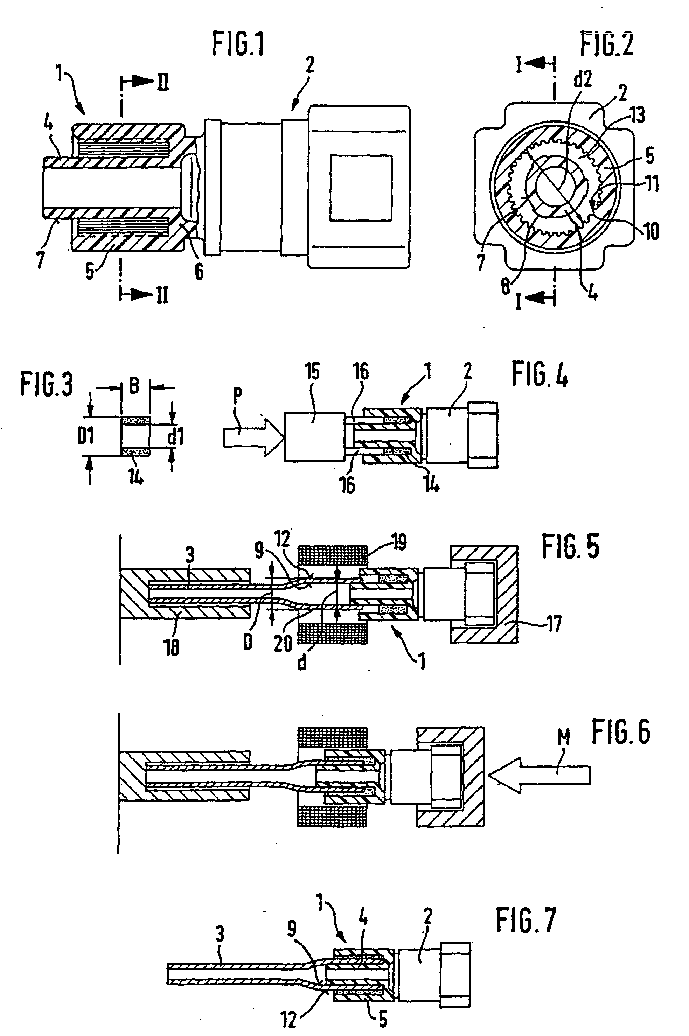

In den **Figuren 1 und 2** ist ein rohrförmiges Kupplungsteil **1** dargestellt, welches einstückig mit einem aus Kunststoff hergestellten Kupplungsgehäuse **2** verbunden ist. Dieses Kupplungsteil **1** dient, wie aus **Fig. 7** ersichtlich, zur Herstellung einer Klebeverbindung mit einer Fluidleitung **3**, welche bsp. aus Aluminiumrohr oder aus sonst einem geeigneten Metallrohr gebildet sein kann. Das Kupplungsteil **1** kann aber auch an einem in der Zeichnung nicht dargestellten Einsteckteil angeformt sein, welches in bekannter Weise zur Herstellung einer lösbaren Steckverbindung in das Kupplungsgehäuse **2** eingeführt wird.

Das Kupplungsteil **1** besteht aus einem Innenrohr **4**, welches in das freie Ende **20** der Fluidleitung **3** eingeführt wird, und aus einem konzentrisch zu diesem ausgebildeten Außenrohr **5,** welches am hinteren Ende des Innenrohrs **4** mit diesem über einen geschlossenen Ring **6** verbunden ist. Das Innenrohr **4** besitzt auf seinem Außenmantel **7** mindestens drei Längsrippen **8,** welche der Innenwand **9** der Fluidleitung **3** als zentrierende Anlage dienen, wenn diese über das Innenrohr **4** aufgeschoben wird (**Fig. 6**).

Das Außenrohr **5** besitzt an seiner Innenseite über den Umfang verteilt eine Vielzahl von achsparallel verlaufenden Rillen **10**, deren Kämme **11** einen Innendurchmesser **d2** aufweisen, welcher geringfügig größer ist, als der Außendurchmesser **D** der Fluidleitung **3**. Das Außenrohr **5** ist zweckmäßigerweise etwa ebenso lang ausgebildet wie der Außendurchmesser **D** der Fluidleitung **3**, während das Innenrohr **4** um etwa die Hälfte länger ist als das Außenrohr **5**.

Zur Herstellung einer Klebeverbindung zwischen dem rohrförmigen Kupplungsteil **1** und der Fluidleitung **3** wird der ringförmige Spalt **13** zwischen dem Innenrohr **4** und dem Außenrohr **5** etwa zur Hälfte mit aufschmelzbarem Klebstoff aufgefüllt, welcher in Form eines fest verpreßten Ringes **14** eingegeben wird (**Fig.3**). Der Außendurchmesser **D1** dieses Ringes **14** ist hierbei etwas kleiner bemessen als der Innendurchmesser **d2** der Kämme **11**, während der Innendurchmesser **d1** des Ringes **14** etwa dem Innendurchmesser **d** der Fluidleitung **3** entspricht. Die Breite **B** des Ringes **14** ist schließlich so dimensioniert, daß der Ring **14** etwa die halbe Tiefe des ringförmigen Spaltes **13** ausfüllt.

Nach dem Einführen des Ringes **14** in den Ringspalt **13** in Pfeilrichtung **P** wird der Ring **14** zweckmäßigerweise unter Verwendung eines Hilfswerkzeugs **15**, das über den Umfang verteilt einige Druckstempel **16** besitzt, bis zur Anlage an den Verbindungsring **6** gedrückt (**Fig.4**). Das mit Klebstoff gefüllte Kupplungsteil **1** ist nun bereit, mit dem freien Ende **20** der Fluidleitung **3** verklebt zu werden.Der Arbeitsablauf ist in den **Fig. 5 und 6** anschaulich dargestellt.

Das Kupplungsgehäuse **2** wird zunächst mit einer Kupplungshalterung **17** in Position gehalten, während die Fluidleitung **3** von einem Rohrhalter **18** in Verlängerung der Achse in Gegenposition gebracht wird. Nun wird das freie Ende **20** der Fluidleitung **3** von einer Induktionsspule **19** umgeben, so daß das Rohrende **20** vorgewärmt werden kann (**Fig.5**).

Das Kupplungsteil **1** wird sodann mittels der Halterung **17** in Richtung des Pfeiles **M** auf das freie Ende **20** der Fluidleitung **3** aufgedrückt und taucht dabei gleichzeitig in die Induktionsspule **19** ein. Aufgrund der von der Induktionsspule ausgehenden Wärmeeinwirkung wird der Klebstoffring **14** aufgeschmolzen. Während das Rohrende **20** der Fluidleitung **3** in den Schmelzklebstoff eindringt, wird dieser aufgrund der Materialverdrängung an der Innenwand **9** und der Außenwand **12** entlang der Rippen **8** bzw. Rillen **10** in Einführrichtung **M** herausgedrückt, wobei die Zwischenräume zwischen dem Rohrende **20** und dem Kupplungsteil **1** vollständig ausgefüllt werden (**Fig.6**).

Nach dem Abbinden und Vorhärten des Schmelzklebstoffs ist der Verbindungsvorgang zwischen Kupplungsteil **1** und Fluidleitung **3** soweit abgeschlossen, daß die Halterungen **17** und **18** für den evtl. erforderlichen Aushärtungsprozess entfernt werden können. ( **Fig.7** ). Die Kupplung **2** mit der angeklebten Fluidleitung **3** können danach ihrem Verwendungszweck zugeführt werden.

Der Rohrhalter **18** ist im vorliegenden Ausführungsbeispiel symbolisch durch einen Massivkörper mit einem sogenannten Sackloch dargestellt, in welches die Fluidleitung **3** mit dem wegführenden Ende eingesteckt ist. Der Rohrhalter kann aber auch als ein die Fluidleitung **3** umspannender Klemmkörper wie z.B eine Rohrschelle Verwendung finden, welche insbesondere dann von Vorteil ist, wenn die Fluidleitung **3** eine größere Länge aufweist als in den **Figuren 5 und 6** dargestellt ist.

### Bezugszeichenliste

- 1: Kupplungsteil
- 2: Kupplungsgehäuse
- 3: Fluidleitung
- 4: Innenrohr
- 5: Außenrohr
- 6: Verbindungsring
- 7: Außenmantel
- 8: Längsrippen
- 9: Innenwand der Fluidleitung
- 10: Achsparallel verlaufende Rillen
- 11: Kämme zwischen den Rillen
- 12: Außenwand der Fluidleitung
- 13: Ringförmiger Spalt
- 14: Klebstoffring
- 15: Hilfswerkzeug
- 16: Druckstempel
- 17: Halterung für Kupplungsgehäuse
- 18: Rohrhalter
- 19: Induktionsspule
- 20: Freies Rohrende

## Patentansprüche

1. **Rohrförmiges Kupplungsteil** zur Herstellung einer Klebeverbindung mit einer Fluidleitung, wobei das Kupplungsteil (1) aus einem in die Fluidleitung (3) einführbaren Innenrohr (4) und einem konzentrisch zu diesem ausgebildeten Außenrohr (5) besteht, welches am hinteren Ende des Innenrohrs (4) mit einen geschlossenen Ring (6) angeformt ist, und wobei der ringförmige Spalt (13) zwischen dem Innenrohr (4) und dem Außenrohr (5) mit einem trockenen, vorzugsweise als festen Ring (14) verpreßten, aufschmelzbaren Klebstoff in solcher Menge befüllt wird, daß die Zwischenräume zwischen der Fluidleitung (3) und dem Innenrohr (4) beziehungsweise dem Außenrohr (5) nach dem Eindrücken der Fluidleitung (3) voll ausgefüllt sind, **dadurch gekennzeichnet, daß** das Innenrohr (4) auf seinem Außenmantel (7) mindestens drei Längsrippen (8) besitzt, welche der Innenwand (9) der Fluidleitung (3) als zentrierende Anlage dienen.

2. Rohrförmiges Kupplungsteil nach Anspruch 1, **dadurch gekennzeichnet, daß** das Außenrohr (5) an seiner Innenseite über den Umfang verteilt eine Vielzahl von achsparallel verlaufenden Rillen (10) besitzt, deren Kämme (11) einen Innendurchmesser (d2) aufweisen, welcher geringfügig größer ist als der Außendurchmesser (D) der Fluidleitung (3).

3. **Verfahren zur Herstellung** einer Klebeverbindung zwischen einem rohrförmigen Kupplungsteil nach Anspruch 1 und der Fluidleitung, **dadurch gekennzeichnet, daß** am Beginn des Zusammenführens der Fluidleitung (3) und dem Innenrohr (4) beim Auftreffen des freien Rohrendes (20) auf den Klebstoffring (14) dieser durch rasche Wärmezufuhr auf Schmelztemperatur gebracht wird, und daß gleichzeitig durch Eindrücken des freien Endes (20) der Klebstoff zum Fließen gebracht wird, wobei ein kleiner Teil davon zwischen Fluidleitung (3) und Innenrohr (4) und der größere Teil davon zwischen Fluidleitung (3) und Außenrohr (5) weggedrückt wird.

4. Verfahren zur Herstellung einer Klebeverbindung zwischen dem rohrförmigen Kupplungsteil und der Fluidleitung nach Anspruch 3, **dadurch gekennzeichnet, daß** das freie Ende (20) der Fluidleitung (3) mittels einer Induktionsspule (19) vorgewärmt wird.

5. Verfahren zur Herstellung einer Klebeverbindung nach Anspruch 4, **dadurch gekennzeichnet, daß** das freie Ende (20) der Fluidleitung (3) zusammen mit der Induktionsspule (19) auf das Kupplungsteil (1) aufgeschoben wird.

## Claims

1. A tubular coupling member for producing an adhesive joint to a fluid line, wherein the coupling member (1) comprises an inner tube (4) which can be introduced into the fluid line (3) and an outer tube (5) which is of a concentric configuration with respect to the inner tube and which is formed at the rear end of the inner tube (4) with a closed ring (6), and wherein the annular gap (13) between the inner tube (4) and the outer tube (5) is filled with a dry meltable adhesive preferably compacted in the form of a solid ring (14) in such an amount that the intermediate spaces between the fluid line (3) and the inner tube (4) and the outer tube (5) respectively are fully filled after the fluid line (3) is pressed in, **characterised in that** the inner tube (4) has on its outside peripheral surface (7) at least three longitudinal ribs (8) which serve as centering support means for the inside wall (9) of the fluid line (3).

2. A tubular coupling member according to claim 1 **characterised in that** at its inward side and distributed over its periphery the outer tube (5) has a plurality of groves (10) which extend parallel to the axis and the crests (11) of which are of an inside diameter (d2) which is slightly larger than the outside diameter (D) of the fluid line (3).

3. A method of making an adhesive joint between a tubular coupling member according to claim 1 and the fluid line **characterised in that** at the beginning of the step of bringing the fluid line (3) and the inner tube (4) together when the free end (20) of the tube meets the adhesive ring (14) it is raised to the melting temperature by the rapid supply of heat and at the same time the adhesive is caused to flow by pressing in the free end (20), in which case a small portion of the adhesive is pushed away between the fluid line (3) and the inner tube (4) and the major portion thereof is pushed away between the fluid line (3) and the outer tube (5).

4. A method of making an adhesive joint between the tubular coupling member and the fluid line according to claim 3 **characterised in that** the free end (20) of the fluid line (3) is pre-heated by means of an induction coil (19).

5. A method of making an adhesive joint according to claim 4 **characterised in that** the free end (20) of the fluid line (3) is pushed together with the induction coil (19) on to the coupling member (1).

## Revendications

1. Raccord tubulaire pour la réalisation d'une liaison d'assemblage collée avec une conduite de fluide, le raccord (1) se composant en l'occurrence d'un tube intérieur (4) destiné à être inséré dans la conduite de fluide et d'un tube extérieur (5) disposé de manière concentrique par rapport à celui-ci qui, au niveau de l'extrémité arrière du tube intérieur (4), est réalisé solidaire par formage d'une bague fermée (6) et dans lequel l'espace annulaire (13) séparant le tube intérieur (4) et le tube extérieur (5) est rempli d'une substance adhésive sèche réactivable par fusion, de préférence comprimée sous la forme d'un anneau solide (14), dans une proportion telle que les intervalles de séparation entre la conduite de fluide (3) et le tube intérieur (4) et le tube extérieur (5) sont remplis dans leur intégralité après l'emmanchement en position de la conduite de fluide (3), **caractérisé en ce que** le tube intérieur (4) comporte, au niveau de son enveloppe extérieure (7) au moins trois nervures longitudinales (8) qui font office de portée de centrage pour la paroi intérieure (9) de la conduite de fluide (3).

2. Raccord tubulaire selon la revendication 1, **caractérisé en ce que** le tube extérieur (5) est muni, sur sa face intérieure, d'une pluralité de rainures disposées parallèlement à son axe et réparties sur sa périphérie, dont les arêtes (11) ont un diamètre intérieur (d2) qui est très légèrement supérieur au diamètre extérieur (D) de la conduite de fluide (3).

3. Procédé de réalisation d'une liaison d'assemblage collée entre un raccord tubulaire selon la revendication 1 et la conduite de fluide, **caractérisé en ce qu'**au début de l'assemblage par rapprochement de la conduite de fluide (3) et du tube intérieur (4), au moment où l'extrémité libre (20) du tube vient buter contre l'anneau de substance adhésive (14), celui-ci est porté à sa température de fusion par un apport de chaleur rapide et **en ce que** l'insertion à force de l'extrémité libre (20) provoque, dans le même temps, un fluage de la substance adhésive, une petite partie de celle-ci étant en l'occurrence refoulée entre la conduite de fluide (3) et le tube intérieur (4) et sa plus grande partie entre la conduite de fluide (3) et le tube extérieur (5).

4. Procédé de réalisation d'une liaison d'assemblage collée entre le raccord tubulaire et la conduite de fluide selon la revendication 3, **caractérisé en ce que** l'extrémité libre (20) de la conduite de fluide (3) est préchauffée au moyen d'une bobine d'induction (19).

5. Procédé de réalisation d'une liaison d'assemblage collée selon la revendication 3, **caractérisé en ce que** l'extrémité libre (20) de la conduite de fluide (3) est emmanchée, conjointement à la bobine d'induction (19), sur le raccord (1).
